(19) Europäisches Patentamt
European Patent Office
Office européen des brevets

(11) **EP 3 286 601 B1**

(12) **EUROPEAN PATENT SPECIFICATION**

(45) Date of publication and mention
of the grant of the patent:
**04.01.2023 Bulletin 2023/01**

(21) Application number: **16774840.9**

(22) Date of filing: **06.04.2016**

(51) International Patent Classification (IPC):
**G06F 3/01** *(2006.01)*        **G06F 3/13** *(2006.01)*
**G06T 7/73** *(2017.01)*

(52) Cooperative Patent Classification (CPC):
**G02B 30/34; G02B 27/0093**

(86) International application number:
**PCT/CN2016/078552**

(87) International publication number:
**WO 2016/169409 (27.10.2016 Gazette 2016/43)**

(54) **A METHOD AND APPARATUS FOR DISPLAYING A VIRTUAL OBJECT IN THREE-DIMENSIONAL (3D) SPACE**

VERFAHREN UND VORRICHTUNG ZUR ANZEIGE EINES VIRTUELLEN OBJEKTS IN EINEM DREIDIMENSIONALEN (3D) RAUM

PROCÉDÉ ET APPAREIL PERMETTANT D'AFFICHER UN OBJET VIRTUEL DANS UN ESPACE TRIDIMENSIONNEL (3D)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.04.2015 CN 201510193772**

(43) Date of publication of application:
**28.02.2018 Bulletin 2018/09**

(73) Proprietor: **BOE Technology Group Co., Ltd.**
**Beijing 100015 (CN)**

(72) Inventors:
• **SHEN, Chenyin**
**Beijing 100176 (CN)**

• **WANG, Qingjiang**
**Beijing 100176 (CN)**

(74) Representative: **Cohausz & Florack**
**Patent- & Rechtsanwälte**
**Partnerschaftsgesellschaft mbB**
**Bleichstraße 14**
**40211 Düsseldorf (DE)**

(56) References cited:
**CN-A- 103 941 851        CN-A- 103 999 018**
**CN-A- 104 331 152        CN-A- 104 331 152**
**CN-A- 104 765 156        US-A1- 2008 218 589**
**US-A1- 2013 154 913      US-A1- 2015 061 998**

**Description**

FIELD OF THE DISCLOSURE

The present disclosure relates to the field of display technologies and, more particularly, relates to a method and apparatus for displaying a virtual object in three-dimensional (3D) space at a desired position with respect to a user.

BACKGROUND

Existing three-dimensional (3D) display devices may present different images to the left eye and the right eye of a viewer. The images may be reproduced in the user's brain. The viewer may perceive a 3D vision in his/her brain based on the images. However, these existing 3D display devices may only create a 3D space in the brain of the viewer, and cannot implement human-machine interactions in a virtual reality scene.

The disclosed method and system are directed to at least partially solve one or more problems set forth above and other problems. The document CN 104 331 152 A discloses an apparatus for displaying a virtual object in 3D space used for calculating the distance between the eyes of a user.

BRIEF SUMMARY OF THE DISCLOSURE

A method according to the invention is defined in claim 1. An apparatus according to the invention is defined in claim 8. Additional embodiments are defined in the dependent claims.

BRIEF DESCRIPTION OF THE DRAWINGS

The following drawings are merely examples for illustrative purposes according to various disclosed embodiments and are not intended to limit the scope of the present disclosure.

FIG. 1 illustrates an exemplary environment incorporating various embodiments of the present disclosure;
FIG. 2 illustrates an exemplary computing system according to various embodiments of the present disclosure;
FIG. 3 illustrates a structure diagram of an exemplary apparatus for displaying a virtual object in three-dimensional (3D) space at a desired position with respect to a user consistent with the present disclosure;
FIG. 4 illustrates a 3D display example based on image parallax consistent with various embodiments of the present disclosure;
FIG. 5 illustrates another 3D display example based on image parallax consistent with various embodiments of the present disclosure;
FIG. 6 illustrates a flow chart of an exemplary process for displaying a virtual object in 3D space at a desired position with respect to a user consistent with various embodiments of the present disclosure;
FIG. 7 illustrates a 3D coordinate system of a virtual reality consistent with various embodiments of the present disclosure;
FIG. 8 illustrates a flow chart of an exemplary process of determining a user's position based on the user's gesture consistent with various embodiments of the present disclosure; and
FIG. 9 illustrates an exemplary 3D display system consistent with various embodiments of the present disclosure.

DETAILED DESCRIPTION

Reference will now be made in detail to exemplary embodiments of the invention, which are illustrated in the accompanying drawings. Hereinafter, embodiments consistent with the disclosure will be described with reference to the drawings. Wherever possible, the same reference numbers will be used throughout the drawings to refer to the same or like parts. It is apparent that the described embodiments are some but not all of the embodiments of the present invention. Based on the disclosed embodiments, persons of ordinary skill in the art may derive other embodiments consistent with the present disclosure, all of which are within the scope of the present invention.

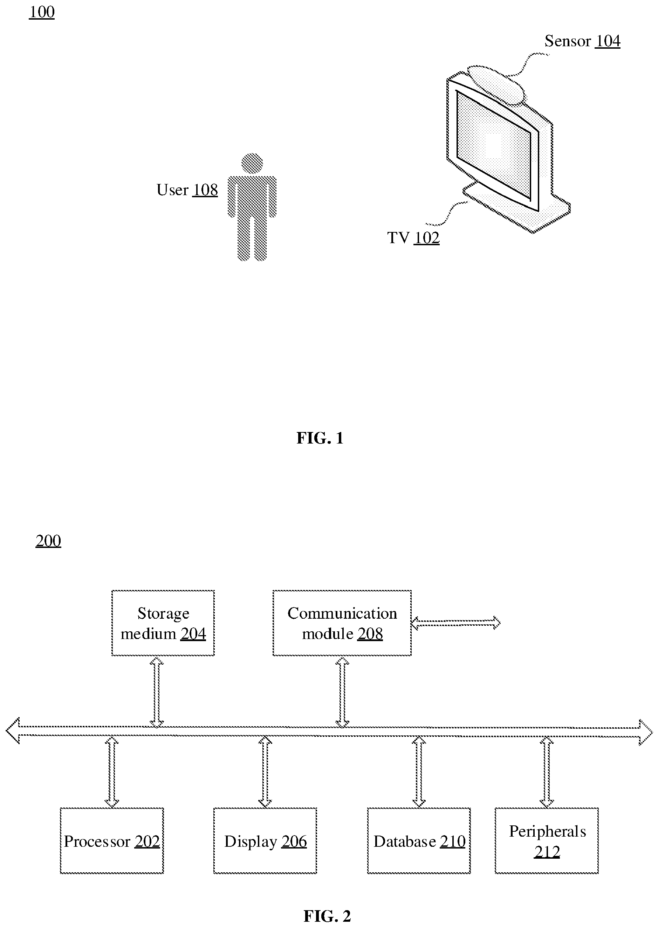

The present disclosure provides a 3D display method and apparatus. FIG. 1 illustrates an exemplary environment 100 incorporating various embodiments of the present disclosure. As shown in Figure 1, environment 100 may include a television set (TV) 102, a sensor 104 and a user 108. Certain devices may be omitted and other devices may be included to provide better descriptions in the present disclosure.

TV 102 may include any appropriate type of TV capable of implementing 3D displays, such as a plasma TV, a liquid crystal display (LCD) TV, a touch screen TV, a projection TV, a smart TV, etc. TV 102 may also include other computing systems, such as a personal computer (PC), a tablet or mobile computer, or a smart phone, etc. Further, TV 102 may incorporate any appropriate type of display modalities to create stereoscopic display effect, such as shutter glasses, polarization glasses, anaglyphic glasses, etc. In certain embodiments, TV 102 may implement naked-eye 3D display technologies. TV 102 may be a virtual reality headset.

Sensor 104 may include any appropriate type of sensors that detects input from user 108 and communicates with TV 102, such as body sensor, motion sensor, microphones, cameras, etc. Sensor 104 may also include remote control functionalities, such as a customized TV remote control, a universal remote control, a tablet computer, a smart phone, or any other computing device capable of performing control functions. Further, sensor 104 may implement sensor-based controls, such as a motion-sensor based control, or a depth-camera enhanced control, as well as simple input/output devices such as a keyboard, a mouse, and a voice-activated input device, etc. In an exemplary embodiment, sensor 104 may track positions of eyes of user 108 and gestures of user 108.

User 108 may interact with TV 102 using sensor 104 to watch various programs and perform other activities of interest. The user may simply use hand or body gestures to control TV 102. If TV 102 is a touch screen TV, the user 108 may also interact with TV 102 by hand gestures. The user 108 may be a single user or a plurality of users, such as family members watching TV programs together.

In operation, TV 102 may present virtual contents with 3D display effects based on the position of user 108 obtained by sensor 104. Further, user 108 may interact with TV 102 through sensor 104 using hand or body gestures. User 108 may also interact with virtual contents, such as specifying a position of a virtual object by hand gestures.

TV 102 and/or sensor 104 may be implemented on any appropriate computing circuitry platform. In operation, the computing circuitry platform may present virtual contents with 3D display effects based on the position of user 108, and interact with user 108 according to his/her hand or body gestures, such as specifying a position of a virtual object by user's hand gestures. Figure 2 shows a block diagram of an exemplary computing system 200 capable of implementing TV 102 and/or sensor 104.

As shown in FIG. 2, computing system 200 may include a processor 202, a storage medium 204, a display 206, a communication module 208, a database 210 and peripherals 212. Certain devices may be omitted and other devices may be included.

Processor 202 may include any appropriate processor or processors. Further, processor 202 can include multiple cores for multi-thread or parallel processing. Processor 202 may execute sequences of computer program instructions to perform various processes. Storage medium 204 may include memory modules, such as ROM, RAM, flash memory modules, and mass storages, such as CD-ROM and hard disk, etc.

Storage medium 204 may store computer programs for implementing various processes when the computer programs are executed by processor 202, such as computer programs for rendering graphics for a user interface, implementing a face recognition process, etc. Storage medium 204 may store computer instructions that, when executed by the processor 202, cause the processor to generate images for 3D displays. The computer instructions can be organized into modules to implement various calculations and functions as described into the present disclosure.

Further, communication module 208 may include certain network interface devices for establishing connections through communication networks. Database 210 may include one or more databases for storing certain data and for performing certain operations on the stored data, such as database searching. Further, the database 210 may store images, videos, personalized information about the user 108, such as preference settings, favorite programs, user profile, etc., and other appropriate contents.

Display 206 may provide information to a user or users of TV 102. Display 206 may include any appropriate type of computer display device or electronic device display such as CRT or LCD based devices. Display 206 may also implement 3D display technologies for creating stereoscopic display effects of input contents. Peripherals 212 may include various sensors and other I/O devices, such as body sensor, motion sensor, microphones, cameras, etc.

The present disclosure provides a method and apparatus for displaying 3D virtual objects to users. An exemplary 3D display apparatus (e.g., TV 102) may simulate a virtual three-dimensional space to a user so that the user may view contents in the 3D space. When the user moves, the 3D display apparatus may perform calculations and adjust the simulated 3D space according to the position change of the user. The 3D display apparatus may utilize various technologies in computer graphics, computer simulation, artificial intelligence, sensor technologies, display technologies, parallel processing, etc.

In an exemplary embodiment, when displaying a virtual target object with 3D effects, the exemplary apparatus may present offset images that are displayed separately to the left and right eye of a viewer. Both of these 2D offset images are then combined in the viewer's brain to give the perception of 3D depth. That is, a left image and a right image may be respectively displayed to the left eye and the right eye. The left image may also be referred to as left eye image, and the right image may also be referred to as right eye image. An image parallax may exist between the left image and the right image so that the viewer may perceive a 3D vision of the target object. The image parallax, as used herein, may refer to a difference in the position of the target object in the left image and the right image. When the left and right images with image parallax are presented to the viewer, in a viewing space corresponding to the viewer, the target object may appear to be protruding out of the display screen or recessing into the display screen. The viewing space, as used herein, may refer to a 3D space in the viewer's perception.

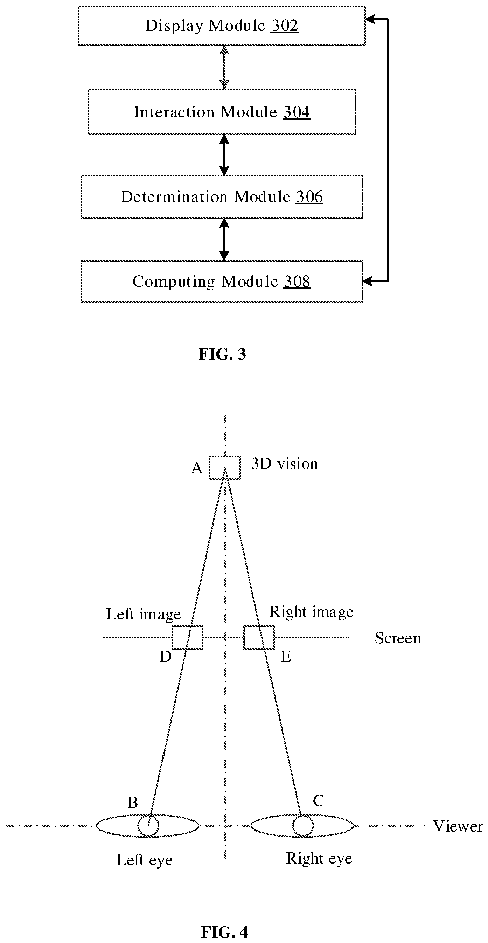

FIG. 3 illustrates a structure diagram of an exemplary apparatus (e.g., TV 102 and/or sensor 104) for displaying a virtual object in 3D space at a desired position with respect to a user consistent with various embodiments of the present disclosure. The exemplary apparatus may also be referred to as a 3D display apparatus. As shown in FIG. 3, the exemplary 3D display apparatus 300 may include a display module 302, an interaction module 304, a determination module 306, and a computing module 308. Certain components may be omitted and other devices may be included.

The display module 302 may be configured to display one or more virtual 3D objects to a user. For example, the display module may present a first virtual object at a first position in the viewing space. Specifically, a pair of a left eye image (i.e., the left image for the left eye) and a right eye image (i.e., the right image for the right eye) corresponding to the first virtual object may be respectively generated. The 3D display apparatus may include a display screen. The left eye image and the right eye image are displayed at different coordinates on the display screen to create a parallax, such that a user may perceive the first virtual object as a 3D object located at the first position in the 3D space with respect to the user (i.e., the viewing space). In other words, the first object may appear to be protruding out of the display screen or recessing into the display screen in the user's perception. The left image and the right image may be respectively displayed to the left eye and the right eye separately. In the disclosed embodiments, the exemplary 3D display apparatus 300 may implement any proper 3D display method, such as with 3D glasses or naked eye 3D display.

In various embodiments, the display module 302 may be any proper display device capable of producing stereoscopic image parallax, such as a 3D TV, a tablet, a mobile phone, 3D glasses, head mounted display, virtual reality helmet, etc. The implementation modality of the display module 302 may include but not limited to 3D glasses and naked eye 3D display. The display module 302 may be configured to receive the left and right images with parallax information, and display pairs of left and right images, thus presenting virtual objects in virtual reality. In some embodiments, the display module 302 may display a virtual object within a reachable distance to the user. A reachable distance, as used herein, may refer to a distance from the object to the user that allows the user to interact with the object using a body part, such as a hand or a finger.

The interaction module 304 may be configured to allow the user to interact with one or more virtual objects. For example, when the display module 302 presents a virtual object to the user, the user may perform various interactions with the object, such as tapping the object, moving the object, deforming the object, etc. The interaction module 304 may be configured to receive such interaction data by collecting the user gestures, generate the left and right images of the virtual object that reflects the user interaction based on the user gestures, and send the generated images to the display module 302 for display. The user may identify a position of a 3D object based on his/her perception (e.g., by pointing at the object in the viewing space) and the interaction module 304 may receive such user interaction data. For example, the interaction module 304 may detect the coordinates of the position that is pointed to by the user. The interaction module 304 may store the coordinates in a memory that can be accessed by the modules such as the determination module 306.

The determination module 306 may be configured to determine actual coordinate values of a 3D object with respect to the user based on the user interaction with the 3D object. The actual coordinate values of a 3D object with respect to the user, as used herein, may refer to a set of coordinates that reflects the position of the 3D object perceived by the user (i.e., in the viewing space). In some embodiments, the determination module 306 may include a body sensor or other input devices that allow the user to identify his/her perceived position of the 3D object, such as a 3D camera, a data glove, a remote, etc. For example, the user may use a finger to point at the position he/she sees the 3D object and the determination module 306 may detect the coordinates of the finger and determine the position of the 3D object accordingly.

In some embodiments, the display module 302 may display a first 3D object by displaying a first left eye image and a first right eye image. The determination module 306 may obtain the position of the first 3D object specified by the user based on user interaction. Further, the display module 302 may display a second 3D object by displaying a second left eye image and a second right eye image. The determination module 306 may obtain the position of the second 3D object specified by the user based on user interaction. The first 3D object and the second 3D object are both within reachable distance to the user. Further, the second position may be spaced away from the first position. In other words, the two objects may not overlap with each other. The distance between the two objects may be long enough to allow the user to clearly differentiate the two objects and allow the determination module 306 to differentiate the actual coordinates of the user's body part when specifying the positions of the two objects.

In one embodiment, the first 3D object and the second 3D object may be displayed sequentially. The display module 302 may display the second 3D object after the determination module 306 determines the position of the first 3D object specified by the user. In another embodiment, the display module 302 may display the first 3D object and the second 3D object at substantially the same time. The interaction module 304 may allow the user to sequentially interact with two objects or interact both objects at the same time.

The computing module 308 may be configured to calculate positions of the user's left eye and right eye. The computing module 308 may also be referred to as a calculator. In one embodiment, the positions of the user's left eye and right eye may be calculated based on positions of the first left eye image and first right eye image corresponding to a first 3D object, the actual coordinate values of the first 3D object and a distance between the user's left eye and right eye. In another embodiment, the positions of the user's left eye and right eye may be calculated based on positions of the first left eye image and the first right eye image, the actual coordinate values of the first 3D object, positions of the second left eye image and the second right eye image, and the actual coordinate values of the second 3D object.

According to the positions of the user's left eye and right eye obtained by the computing module 308, , the display module 302 may be further configured to display one or more 3D virtual objects or 3D scenes at a desired position in the viewing space. Specifically, based on the positions of the user's left eye and right eye and the desired position in the viewing space, the computing module 308 may calculate position of a left image corresponding to the virtual object and position of a right image corresponding to the virtual object.

In some embodiments, the functionalities of the interaction module 304 may be implemented by the display module 302 and the determination module 306. For example, when the display module 302 presents a virtual object, the user may perform a gesture to interact with the virtual object. The determination module 306 may capture the user gesture and determine corresponding adjustment of the virtual object based on the user gesture. For example, when the user moves the virtual object with a hand, the determination module 306 may detect the coordinates of the hand and the display module 302 may correspondingly update the positions of the left eye image and right eye image such that the virtual object appears to be moving along with the user's hand.

As used herein, a first set of coordinates may refer to the position of the left eye of a user. A second set of coordinates may refer to the position of the right eye of the user. A third set of coordinates may refer to the position of a virtual object in the viewing space. A fourth set of coordinates may refer to the position of the left eye image corresponding to the virtual object. A fifth set of coordinates may refer to the position of the right eye image corresponding to the virtual object. In one embodiment, the display module 302 may display the first virtual object at the third set of coordinates by displaying the left eye image at the fourth set of coordinates and the right eye image at the fifth set of coordinates. Accordingly, the computing module 408 may calculate the first set of coordinates and the second set of coordinates corresponding the user's left and right eye.

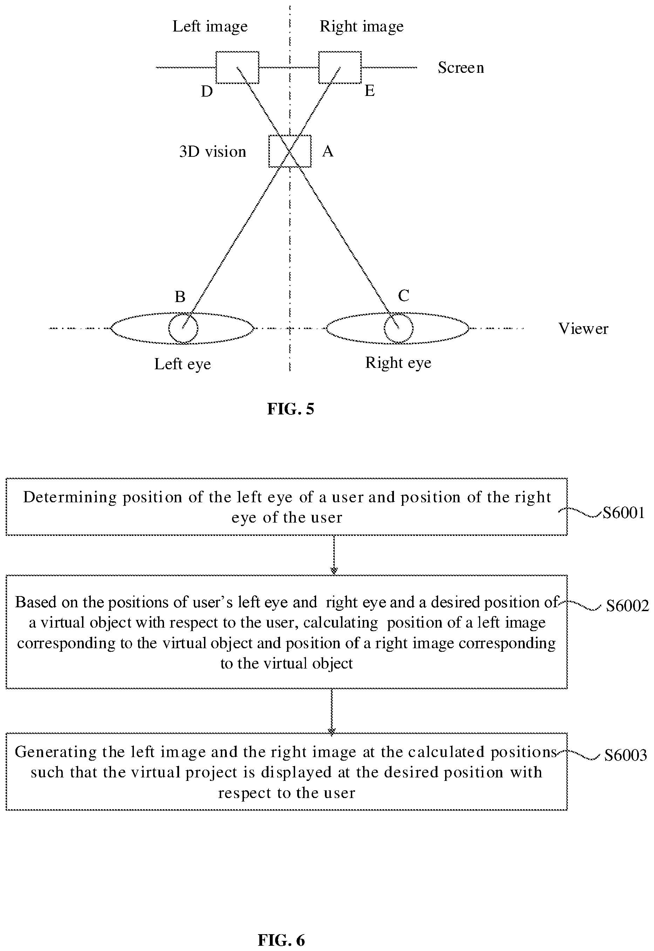

FIG. 4 illustrates a 3D display example based on image parallax consistent with various embodiments of the present disclosure. FIG. 5 illustrates another 3D display example based on image parallax consistent with various embodiments of the present disclosure. FIG. 4 illustrates the situation when virtual position of a 3D object is on the outside of the viewer and the screen (recessing inward of the screen). FIG. 5 illustrates the situation when virtual position of a 3D object is in between the viewer and the screen (protruding out of the screen).

As shown in FIGs. 4-5, point A illustrates a virtual position where the viewer may perceive a target 3D object in the viewing space. Point B illustrates the position of the left eye of the viewer, and Point C illustrates the position of the right eye of the viewer. Point D illustrates the position of the left image of the target object on the display screen. Point E illustrates the position of the right image of the target object on the display screen. The display screen is on the same plane as line segment DE.

In one embodiment, the positions of the left eye and right eye of a user may be detected by a first body sensor. The first body sensor may be configured to detect the first set of coordinates and the second set of coordinates. That is, the first set of coordinates and the second set of coordinates detected by the first body sensor may be directly utilized. In other embodiments, the positions of the left eye and right eye of the user may be calculated and obtained by the exemplary apparatus 300. When the 3D display apparatus 300 is in operation the left eye B and the right eye C may change position in real-time. The apparatus 300 may dynamically correct coordinates of D and E (i.e., positions of the left image and the right image of the target object), thus providing 3D vision of the target object at the predetermined position A with a desired precision.

As shown in FIG. 4 and FIG. 5, triangle ABC and triangle ADE are similar. Thus, the ratio between line segment AD and line segment AB, the ratio between line segment AE and line segment AC, and the ratio between line segment DE and line segment BC are the same. When locations of the left eye and the right eye are determined, providing the left image at position D and the right image at position E may produce a 3D vision of the target object at position A. That is, given coordinates of the left eye and the right eye, when coordinates of D and E are determined, the 3D vision of the target object may be presented at position A. The coordinates of A, B and C may be obtained in advance. Further, according to the proportional relationship between the line segments described previously, the coordinates of D and E may be calculated correspondingly. Therefore, the user may specify the 3D vision of the target object at position A. That is, the user may interact with a virtual object in virtual reality.

Further, in some embodiments, the computing module 308 may be configured to determine the first set of coordinates (i.e., the position of the left eye) and the second set of coordinates (i.e., the position of the right eye) based on a preset fourth set of coordinates (i.e., the position of the first left eye image), a preset fifth set of coordinates (i.e. the position of the first right eye image) and the third set of coordinates (i.e., the actual coordinates of the first virtual object with respect to the user obtained from the determination module 306). Specifically, the ratio between line segment AD and line segment AB, the ratio between line segment AE and line segment AC, and the ratio between line segment DE and line segment BC are the same. When the coordinates of A, D, and E are obtained, the coordinates of B and C may be deduced reversely.

In certain embodiments, the determination module 306 may be further configured to detect a sixth set of coordinates correspond to the user's body, and determine the third set of coordinates (i.e., the actual coordinates of the first virtual object) according to the sixth set of coordinates correspond to the user's body. For example, the determination module 306 may include a second body sensor configured to detect the sixth set of coordinates and obtain the position of a body part directly. The body part may be a finger of the user. The 3D display apparatus 300 may determine the position of point A based on the coordinates of the finger and display a virtual object at point A. The user may interact with the virtual object, such as grabbing the object or moving the object.

In the exemplary 3D display apparatus 300, when the positions of the left eye and the right eye are determined (e.g., the first set of coordinates corresponding to the left eye and the second set of coordinates corresponding to the right eye obtained by the computing module 308 or the first body sensor), the display module 302 may present an arbitrary target object at a desired position (e.g., the third set of coordinates). According to the first set of coordinates, the second set of coordinates and the third set of coordinates, the computing module 302 may calculate the fourth set of coordinates corresponding to the left image of the target object and the fifth set of coordinates corresponding to the right image of the target object. Further, the display module 302 may display the target object at the desired position in the viewing space with 3D effects by displaying the left image at the fourth set of coordinates and the right image at the fifth set of coordinates.

In one embodiment, the 3D display apparatus 300 may identify the desired position of a target object (i.e., the third set of coordinates). In another embodiment, the user may specify the third set of coordinates using hand gestures recognized by a body sensor. Therefore, the 3D display apparatus 300 may facilitate human-machine interactions.

The user may specify the locations of a target object by a predefined gesture, such as pointing the target object at a position he/she perceives in the viewing space for a certain time (e.g., longer than a second), tapping the target object, etc.

Further, the 3D display apparatus 300 may allow the user to move a target object by predefined gestures (e.g., by the interaction module 304). For example, the user may grab the target object by two fingers, move the target object to a second position and hold for a certain time (e.g., longer than a second) to indicate the end of the moving action. In another example, the user may tap a target object to indicate that it is chosen, and tap another position in the viewing space to indicate the end of moving action. The 3D display apparatus 300 may update the position of the target object according to the coordinates of the tapped position (e.g., by the determination module 306), and present the target object at the second position in the 3D viewing space (e.g., by the display module 302).

In certain embodiments, the body sensor for detecting human gestures and/or locations of human eyes may be a stereo camera or a combination of RGB cameras and depth sensors. The stereo camera may have a plurality of lenses for capturing stereoscopic images. Human gestures may be extracted by processing the captured stereoscopic images.

FIG.6 illustrates a flow chart of an exemplary process for displaying a virtual object in 3D space at a desired position with respect to a user consistent with various embodiments of the present disclosure. As shown in FIG. 6, an exemplary process may include the following steps.

Step 6001 may include determining positions of the user's left eye and right eye (i.e., a first set of coordinates corresponding to the left eye of a user and a second set of coordinates corresponding to the right eye of the user).

In one embodiment, a first body sensor may be configured to detect the first set of coordinates and the second set of coordinates. That is, the first set of coordinates and the second set of coordinates obtained by the first body sensor may be directly utilized. Referring to FIG. 2 and FIG. 3, the first body sensor may obtain position changes of the left eye B and the right eye C in real-time to dynamically correct coordinates of D and E (i.e., positions of the left image and the right image of the target object), thus providing 3D display of the target object A at a predetermined position (i.e., the third set of coordinates) with a desired precision.

In another embodiment, based on position of a left eye image corresponding to a virtual object (i.e., a fourth set of coordinates), position of a right eye image corresponding to the virtual object (i.e., a fifth set of coordinates) and coordinates of the virtual object obtained from user interaction (i.e., a third set of coordinates), the positions of the user's left eye and right eye (i.e., the first set of coordinates and the second set of coordinates) may be calculated. Specifically, as shown in FIG. 2 and FIG. 3, the ratio between line segment AD and line segment AB, the ratio between line segment AE and line segment AC, and the ratio between line segment DE and line segment BC are the same. Thus, when the coordinates of A, D, and E are obtained, the coordinates of B and C may be deduced reversely.

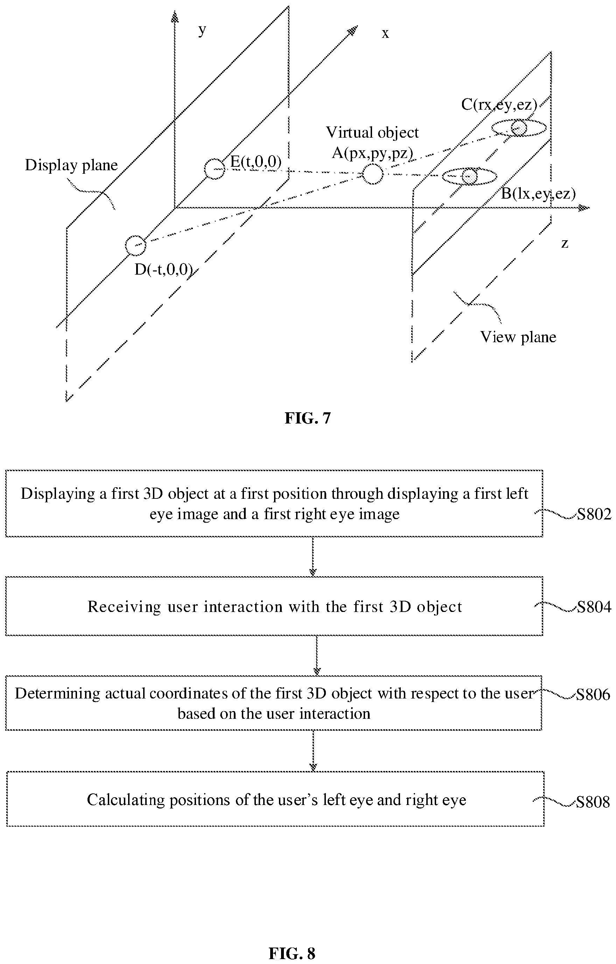

Specifically, FIG. 7 illustrates a 3D coordinate system of a virtual reality implemented in the exemplary 3D display apparatus or the exemplary process consistent with various embodiments of the present disclosure. As shown in FIG. 7, a display plane and a view plane are both parallel to x-y plane in the coordinate system. The display plane may be a display screen of the disclosed 3D display apparatus or other proper 3D display devices. The origin of the display plane is set at coordinates (*0, 0, 0*). The view plane may be determined by locations of the user's eyes. A line connecting the left eye (i.e., point B) and the right eye (i.e., point C) of the user is set to be parallel with the x axis. The view plane is a plane that crosses both eyes of the user and parallels with the display plane.

The coordinates of the left eye B are denoted as ($lx, ey, ez$), and the coordinates of the right eye C are denoted as ($rx, ey, ez$). A left image D of a target virtual object A may be displayed on the display plane, and a right image E of the target virtual object A may also be displayed on the display plane. The coordinates of D may be preset as ($-t, 0, 0$), and the coordinates of E may be preset as ($t, 0, 0$).

The user may specify the position of the target virtual object A by pointing his/her finger at a position denoted as ($px, py, pz$). A second body sensor may be configured to detect finger position of the user and obtain the third set of coordinates corresponding to the target object A. Equations (1) - (3) may be deduced accordingly.

$$\frac{px - rx}{px - (-t)} = \frac{px - lx}{px - t} \tag{1}$$

$$\frac{py}{t - (-t)} = \frac{ey - py}{rx - lx} \tag{2}$$

$$\frac{pz}{t - (-t)} = \frac{ez - pz}{rx - lx} \tag{3}$$

Assuming the distance between the left eye and the right eye of the user (i.e., interocular distance) is 65mm, equation (4) may be deduced.

$$rx - lx = 0.065 \tag{4}$$

According to equations (1) - (4), four unknowns $lx, rx, ey$ and $ez$ may be solved. Thus, the first set of coordinates corresponding to the left eye B ($lx, ey, ez$) and the second set of coordinates corresponding to the right eye C ($rx, ey, ez$) may be calculated.

Therefore, the disclosed 3D display method may allow the user to specify the locations of one or more target objects and use the specified locations to calculate locations of the user's left and right eye. This approach may be used in calibrating the user's position when the user is standing still or dynamically updating the user's position when the user is moving.

FIG. 8 illustrates a flow chart of an exemplary process of determining a user's position based on the user's gesture. In an exemplary embodiment, the process may include displaying a first 3D object at a first position through displaying a first left eye image and a first right eye image (S802). The first position is within a reachable distance to the user. The first left eye image of the first 3D object may be displayed at a current fourth set of coordinates and the right image of the target object is at a current fifth set of coordinates. When displaying the first 3D object for the first time, the current position may be a standard position assigned by the 3D display apparatus. Alternatively, the current position may be obtained from previous calculations.

The user may interact with the first 3D object (S804). For example, the user may point at the first 3D object at a perceived position by his/her finger/hand. The apparatus (e.g., the interaction module 304) may receive the data related to the user's interaction. The apparatus (e.g., the determination module 306) may detect actual coordinates of the first 3D object with respect to the user (i.e., the specified sixth set of coordinates) based on the user interaction (S806). Further, the third set of coordinates may be updated according to the detected sixth set of coordinates. Based on the position of the left eye image corresponding to the first 3D object (i.e., the current fourth set of coordinates), the position of the right eye image corresponding to the first 3D object (i.e., the current fifth set of coordinates) and the actual coordinates of the first 3D object with respect to the user (i.e., the updated third set of coordinates pointed by the user), the locations of the left and right eye of the user may be calculated (S808). For example, equations (1) - (4) may be established to solve the coordinates of the left eye and the right eye.

In some embodiments, the determination module 306may obtain coordinates of two virtual objects A and F. Specifically, before step S808, the process may further include displaying a second 3D object at a second position through displaying a second left eye image and a second right eye image; receiving a user interaction with the second 3D object; and determining actual coordinate values of the second 3D object with respect to the user based on the user interaction with the second 3D object. The second position is within the reachable distance to the user. Further, step S808 may include calculating positions of the user's left eye and right eye based on positions of the first left eye image and the first right eye image, the actual coordinate values of the first 3D object, positions of the second left eye image and the second right eye image, and the actual coordinate values of the second 3D object.

For example, the exemplary apparatus may allow the user to specify the coordinates of A and F one by one. The coordinates of A and F are denoted as ($px, py, pz$) and ($px2, py2, pz2$) respectively. In some embodiments, A and F may be spaced away such that the user and the exemplary apparatus may differentiate positions of the two objects and user interactions with the two objects. Correspondingly, the coordinates of a left image of A may be preset as ($-t$, $0, 0$), and the coordinates of a right image of A may be preset as ($t, 0, 0$). The coordinates of a left image of F may be preset as ($-t2, 0, 0$), and the coordinates of a right image of F may be preset as ($t2, 0, 0$). Equations (5) - (10) may be deduced.

$$\frac{px - rx}{px - (-t)} = \frac{px - lx}{px - t} \tag{5}$$

$$\frac{py}{t - (-t)} = \frac{ey - py}{rx - lx} \tag{6}$$

$$\frac{pz}{t - (-t)} = \frac{ez - pz}{rx - lx} \tag{7}$$

$$\frac{px2 - rx}{px2 - (-t2)} = \frac{px2 - lx}{px2 - t2} \tag{8}$$

$$\frac{py2}{t2 - (-t2)} = \frac{ey - py2}{rx - lx} \tag{9}$$

$$\frac{pz2}{t2 - (-t2)} = \frac{ez - pz2}{rx - lx} \tag{10}$$

In one embodiment, any four equations from equations (5) - (10) may be solved to obtain the unknowns $lx, rx$, $ey$ and $ez$, In another embodiment, one combination of four equations may be preconfigured as the to-be-solved set, such as equations (6) - (9). In another embodiment, a plurality of four-equation combinations may be solved to obtain at least two sets of results. The results may be averaged to obtain final values of $lx, rx, ey$ and $ez$. Further, the first set of coordinates corresponding to the left eye B ($lx, ey, ez$) and the second set of coordinates corresponding to the right eye C ($rx, ey, ez$) may be obtained.

Further, when the coordinates of both eyes are determined, given any target object G with a desired position ($px3, py3, pz3$), the position of G's left image denoted as ($t3, 0, 0$) and the position of G's right image denoted as ($-t3, 0, 0$) on the display plane may be deduced. Further, the 3D display method may include continuously tracking the positions of the user's eye to update coordinates ($lx, ey, ez$) of the left eye and coordinates ($rx, ey, ez$) of the right eye.

Returning to FIG. 6, a third set of coordinates may specify a desired position of the target object G in the 3D space. Step S6002 may include calculating position of G's left image (i.e., a fourth set of coordinates corresponding to G's left image) and position of G's right image (i.e., a fifth set of coordinates corresponding to G's right image) based on the position of user's left eye (i.e., the first set of coordinates), the position of user's right eye (i.e., the second set of coordinates) and a desired position of G in the viewing space (i.e., the third set of coordinates).

Further, in some embodiments, before performing step 6002, a sixth set of coordinates corresponding to a user's body may be detected, and the third set of coordinates may be determined based on the sixth set of coordinates. For example, a second body sensor may be configured to detect the position of a body part and obtain the sixth set of coordinates. The body part may be a finger of the user. The user may specify to display a target object at the desired position by finger gestures. The user may interact with the virtual object, such as grabbing the object or moving the object.

Step 6003 may include displaying the left image at the fourth set of coordinates and generating the right image at the fifth set of coordinates. In various embodiments, the pair of left and right images with parallax may be displayed to the left eye and the right eye of a user respectively. The image parallax may be utilized to create 3D visions. The disclosed 3D display method may implement any proper kind of 3D display modality, such as 3D glasses or naked eye 3D display. Therefore, the target object may be displayed in 3D at the desired position (i.e., the third set of coordinates) by displaying the left image at the fourth set of coordinates and the right image at the fifth set of coordinates.

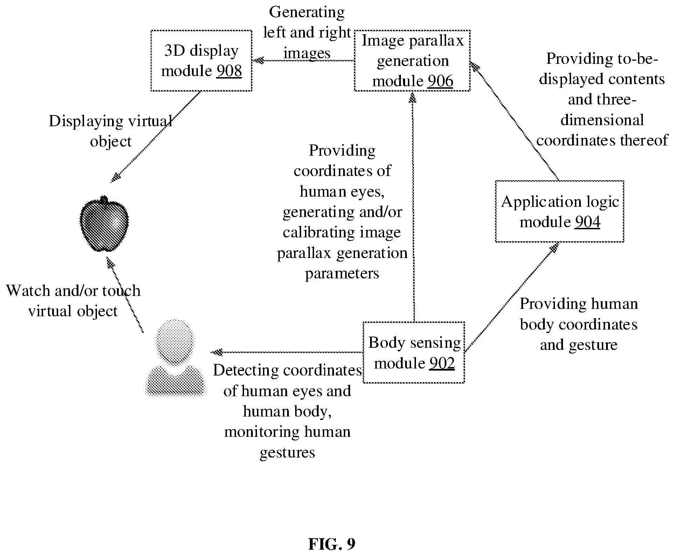

FIG. 9 illustrates an exemplary 3D display system consistent with various embodiments of the present disclosure. As shown in FIG. 9, the 3D display system may include a body sensing module 902, an application logic module 904, an image parallax generation module 906 and a 3D display module 908. The 3D display system may by implemented by, for example, the exemplary apparatus 300.

The body sensing module 902 may be configured to detect coordinates of human eyes and human body, and monitor hand/body gestures of a user. The body sensing module 902 may be implemented by, for example, the interaction module 304 and/or the determination module 306 and the computing module 308. The coordinates of human eyes may facilitate presenting 3D contents to the user with a desired display precision and 3D effect. The hand/body gestures of the user may be used as control signals to perform certain tasks, such as specifying object location, moving an object, adjust displaying contents, etc. Further, the body sensing module 902 may determine human body coordinates and gestures to the application logic module 904. In addition, the body sensing module 902 may determine coordinates of human eyes to the image parallax generation module 906.

The application logic module 904 may be configured to provide to-be-displayed contents and coordinates of the contents to the image parallax generation module 906. For example, the to-be-displayed content may be a target object. The application logic module 904 may provide an original image of the target object and 3D coordinates of the target object to the image parallax generation module 906. Further, when a user gesture suggests changing and/or updating the position of the target object, the application logic module 904 may send the updated coordinates of the target object to the image parallax generation module 906.

The image parallax generation module 906 may be configured to generate stereoscopic images of the to-be-displayed contents according to coordinates of human eyes and coordinates of the to-be-displayed contents. For example, the image parallax generation module 906 may generate a left image and a right image of the target object. A parallax may exist between the left image and the right image to provide 3D display effect. Further, the image parallax generation module 906 may send the stereoscopic images to the 3D display module 908. The 3D display module 908 may be configured to display the received images/contents in the viewing space with 3D effects. The image parallax generation module 906 and the 3D display module 908 may be implemented by, for example, the display module 302.

The disclosed 3D display method, apparatus and system may be implemented in any appropriate virtual reality applications, such as presenting 3D images/videos, playing 3D video games, presenting interactive contents, etc.

In various embodiments, the disclosed modules for the exemplary system as depicted above can be configured in one device or configured in multiple devices as desired. The modules disclosed herein can be integrated in one module or in multiple modules for processing messages. Each of the modules disclosed herein can be divided into one or more sub-modules, which can be recombined in any manners. The disclosed modules may be stored in the memory and executed by one or more processors to implement various functions.

The disclosed embodiments are examples only. One of ordinary skill in the art would appreciate that suitable software and/or hardware (e.g., a universal hardware platform) may be included and used to perform the disclosed methods. For example, the disclosed embodiments can be implemented by hardware only, which alternatively can be implemented by software only or a combination of hardware and software. The software can be stored in a storage medium. The software can include suitable commands to enable any client device (e.g., including a digital camera, a smart terminal, a server, or a network device, etc.) to implement the disclosed embodiments.

Other embodiments of the disclosure will be apparent to those skilled in the art from consideration of the specification and practice of the invention disclosed herein. It is intended that the specification and examples be considered as exemplary only, with a true scope of the invention being indicated by the claims.

## Claims

1. A method for displaying a virtual object in three-dimensional (3D) space at a desired position with respect to a user, comprising:

   displaying (S802) a first 3D object at a first position through displaying a first left eye image and a first right eye image on a display screen, wherein the first position is within a reachable distance to the user;
   receiving (S804) a user interaction with the first 3D object, wherein the user interaction includes identifying a position of the first 3D object by the user;
determining (S806) actual coordinate values of the first 3D object with respect to the user based on the user interaction with the first 3D object;
calculating (S808) positions of the user's left eye and right eye based on positions of the first left eye image and the first right eye image, the actual coordinate values of the first 3D object, and a distance between the user's left eye and right eye; and
displaying the virtual object at the desired position through displaying a virtual object's left image and a virtual object's right image on the display screen which are deduced based on the positions of the user's left eye and right eye and the desired position of the virtual object.

2. The method according to claim 1, further comprising, prior to the step of calculating positions of the user's left eye and right eye:

   displaying a second 3D object at a second position through displaying a second left eye image and a second right eye image, wherein the second position is within the reachable distance to the user;
   receiving a user interaction with the second 3D object, wherein the user interaction includes identifying a position of the second 3D object by the user; and
   determining actual coordinate values of the second 3D object with respect to the user based on the user interaction with the second 3D object.

3. The method according to claim 2, wherein the step of calculating positions of the user's left eye and right eye is based on positions of the first left eye image and the first right eye image, the actual coordinate values of the first 3D object, positions of the second left eye image and the second right eye image, and the actual coordinate values of the second 3D obj ect.

4. The method according to claim 2, wherein the second position is spaced away from the first position.

5. The method according to claim 1, wherein the step of determining actual coordinate values of the first 3D object with respect to the user further comprises:

   detecting coordinate values of a body part of the user; and
   determining the coordinate values of the first 3D object based on the coordinate values of the body part.

6. The method according to claim 5, wherein: the coordinate values of the body part of the user is detected by a 3D camera, a data glove, or a remote.

7. The method according to claim 5, wherein the body part of the user comprises a finger.

8. An apparatus for displaying a virtual object in three-dimensional (3D) space at a desired position with respect to a user, comprising:

   a display module (302) configured to display a first 3D object at a first position through displaying a first left eye image and a first right eye image on a display screen, wherein the first position is within a reachable distance to the user;
   an interaction module (304) configured to receive a user interaction with the first 3D object, wherein the user interaction includes identifying a position of the first 3D object by the user;
   a determination module (306) configured to determine actual coordinate values of the first 3D object with respect to the user based on the user interaction with the first 3D object;
   a computing module (308) configured to calculate positions of the user's left eye and right eye based on positions of the first left eye image and the first right eye image, the actual coordinate values of the first 3D object, and a distance between the user's left eye and right eye;
   wherein the display module is further configured to display the virtual object at the desired position through displaying a virtual object's left image and a virtual object's right image on the display screen which are deduced based on the positions of the user's left eye and right eye and the desired position of the virtual object.

9. The apparatus according to claim 8, wherein:

   the display module is further configured to display a second 3D object at a second position through displaying a second left eye image and a second right eye image;

the interaction module is further configured to receive a user interaction with the second 3D object, wherein the user interaction includes identifying a position of the second 3D object by the user; and

the determination module is further configured to determine actual coordinate values of the second 3D object with respect to the user based on the user interaction with the second 3D object.

10. The apparatus according to claim 9, wherein the computing module is further configured to:
calculate the positions of the user's left eye and right eye based on positions of the first left eye image and the first right eye image, the actual coordinate values of the first 3D object, positions of the second left eye image and the second right eye image, and the actual coordinate values of the second 3D object.

11. The apparatus according to claim 9, wherein the second position is spaced away from the first position.

12. The apparatus according to claim 8, wherein the determination module is further configured to

detect coordinate values of a body part of the user; and
determine the coordinate values of the first 3D object based on the coordinate values of the body part.

13. The apparatus according to claim 12, wherein:
the coordinate values of the body part of the user is detected by a 3D camera, a data glove, or a remote.

14. The apparatus according to claim 12, wherein:
the body part of the user comprises a finger.

**Patentansprüche**

1. Verfahren zur Anzeige eines virtuellen Objekts im dreidimensionalen (3D) Raum an einer gewünschten Position in Bezug auf einen Benutzer, umfassend:

Anzeigen (S802) eines ersten 3D-Objekts an einer ersten Position durch Anzeigen eines ersten Bildes für das linke Auge und eines ersten Bildes für das rechte Auge auf einem Anzeigeschirm, wobei sich die erste Position innerhalb einer erreichbaren Entfernung zu dem Benutzer befindet;
Empfangen (S804) einer Benutzerinteraktion mit dem ersten 3D-Objekt, wobei die Benutzerinteraktion ein Identifizieren einer Position des ersten 3D-Objekts durch den Benutzer umfasst;
Bestimmen (S806) aktueller Koordinatenwerte des ersten 3D-Objekts in Bezug auf den Benutzer auf der Grundlage der Benutzerinteraktion mit dem ersten 3D-Objekt;
Berechnen (S808) von Positionen des linken Auges und des rechten Auges des Benutzers auf der Grundlage von Positionen des ersten Bildes für das linke Auge und des ersten Bildes für das rechte Auge, der aktuellen Koordinatenwerte des ersten 3D-Objekts und eines Abstands zwischen dem linken Auge und dem rechten Auge des Benutzers; und
Anzeigen des virtuellen Objekts an der gewünschten Position durch Anzeigen eines linken Bildes des virtuellen Objekts und eines rechten Bildes des virtuellen Objekts auf dem Anzeigeschirm, die auf der Grundlage der Positionen des linken Auges und des rechten Auges des Benutzers und der gewünschten Position des virtuellen Objekts abgeleitet werden.

2. Verfahren nach Anspruch 1, wobei vor dem Schritt des Berechnens der Positionen des linken Auges und des rechten Auges des Benutzers Folgendes vorgesehen ist:

Anzeigen eines zweiten 3D-Objekts an einer zweiten Position durch Anzeigen eines zweiten Bildes für das linke Auge und eines zweiten Bildes für das rechte Auge, wobei sich die zweite Position innerhalb der erreichbaren Entfernung zu dem Benutzer befindet;
Empfangen einer Benutzerinteraktion mit dem zweiten 3D-Objekt, wobei die Benutzerinteraktion ein Identifizieren einer Position des zweiten 3D-Objekts durch den Benutzer umfasst; und
Bestimmen aktueller Koordinatenwerte des zweiten 3D-Objekts in Bezug auf den Benutzer auf der Grundlage der Benutzerinteraktion mit dem zweiten 3D-Objekt.

3. Verfahren nach Anspruch 2, wobei der Schritt des Berechnens von Positionen des linken Auges und des rechten Auges des Benutzers auf Positionen des ersten Bildes für das linke Auge und des ersten Bildes für das rechte Auge, den aktuellen Koordinatenwerten des ersten 3D-Objekts, Positionen des zweiten Bildes für das linke Auge und des zweiten Bildes für das rechte Auge und den aktuellen Koordinatenwerten des zweiten 3D-Objekts begründet wird.

4.  Verfahren nach Anspruch 2, wobei die zweite Position mit Abstand von der ersten Position angeordnet wird.

5.  Verfahren nach Anspruch 1, wobei der Schritt des Bestimmens der aktuellen Koordinatenwerte des ersten 3D-Objekts in Bezug auf den Benutzer ferner umfasst:

Erfassen von Koordinatenwerten eines Körperteils des Benutzers; und
Bestimmen der Koordinatenwerte des ersten 3D-Objekts auf der Grundlage der Koordinatenwerte des Körperteils.

6.  Verfahren nach Anspruch 5, wobei:
die Koordinatenwerte des Körperteils des Benutzers durch eine 3D-Kamera, einen Datenhandschuh oder eine Fernbedienung erfasst werden.

7.  Verfahren nach Anspruch 5, wobei der Körperteil des Benutzers einen Finger umfasst.

8.  Vorrichtung zur Anzeige eines virtuellen Objekts im dreidimensionalen (3D) Raum an einer gewünschten Position in Bezug auf einen Benutzer, aufweisend:

ein Anzeigemodul (302), das konfiguriert ist, um ein erstes 3D-Objekt an einer ersten Position durch Anzeigen eines ersten Bildes für das linke Auge und eines ersten Bildes für das rechte Auge auf einem Anzeigeschirm anzuzeigen, wobei sich die erste Position innerhalb einer erreichbaren Entfernung zu dem Benutzer befindet;
ein Interaktionsmodul (304), das konfiguriert ist, um eine Benutzerinteraktion mit dem ersten 3D-Objekt zu empfangen,
wobei die Benutzerinteraktion ein Identifizieren einer Position des ersten 3D-Objekts durch den Benutzer umfasst;
ein Bestimmungsmodul (306), das konfiguriert ist, um aktuelle Koordinatenwerte des ersten 3D-Objekts in Bezug auf den Benutzer auf der Grundlage der Benutzerinteraktion mit dem ersten 3D-Objekt zu bestimmen;
ein Berechnungsmodul (308), das konfiguriert ist, um Positionen des linken Auges und des rechten Auges des Benutzers auf der Grundlage von Positionen des ersten Bildes für das linke Auge und des ersten Bildes für das rechte Auge, der aktuellen Koordinatenwerte des ersten 3D-Objekts und einen Abstand zwischen dem linken Auge und dem Auge des Benutzers zu berechnen;
wobei das Anzeigemodul ferner konfiguriert ist, um das virtuelle Objekt an der gewünschten Position anzuzeigen, indem es ein linkes Bild des virtuellen Objekts und ein rechtes Bild des virtuellen Objekts auf dem Anzeigeschirm anzeigt, die auf der Grundlage der Positionen des linken Auges und des rechten Auges des Benutzers und der gewünschten Position des virtuellen Objekts abgeleitet werden.

9.  Vorrichtung nach Anspruch 8, wobei:

das Anzeigemodul ferner konfiguriert ist, um ein zweites 3D-Objekt an einer zweiten Position anzuzeigen, indem es ein zweites Bild für das linke Auge und ein zweites Bild für das rechte Auge anzeigt;
das Interaktionsmodul ferner konfiguriert ist, um eine Benutzerinteraktion mit dem zweiten 3D-Objekt zu empfangen, wobei die Benutzerinteraktion ein Identifizieren einer Position des zweiten 3D-Objekts durch den Benutzer aufweist; und
das Bestimmungsmodul ferner konfiguriert ist, um aktuelle Koordinatenwerte des zweiten 3D-Objekts in Bezug auf den Benutzer auf der Grundlage der Benutzerinteraktion mit dem zweiten 3D-Objekt zu bestimmen.

10. Vorrichtung nach Anspruch 9, wobei das Berechnungsmodul ferner konfiguriert ist, um:
Positionen des linken Auges und des rechten Auges des Benutzers auf der Grundlage der Positionen des ersten Bildes für das linke Auge und des ersten Bildes für das rechte Auge, die aktuellen Koordinatenwerte des ersten 3D-Objekts, die Positionen des zweiten Bildes für das linke Auge und des zweiten Bildes für das rechte Auge und die aktuellen Koordinatenwerte des zweiten 3D-Objekts zu berechnen.

11. Vorrichtung nach Anspruch 9, wobei die zweite Position mit Abstand von der ersten Position angeordnet wird.

**12.** Vorrichtung nach Anspruch 8, wobei das

Bestimmungsmodul ferner konfiguriert ist, um Koordinatenwerte eines Körperteils des Benutzers zu erfassen; und

die Koordinatenwerte des ersten 3D-Objekts auf der Grundlage der Koordinatenwerte des Körperteils zu bestimmen.

**13.** Vorrichtung nach Anspruch 12, wobei:
die Koordinatenwerte des Körperteils des Benutzers von einer 3D-Kamera, einem Datenhandschuh oder einer Fernbedienung erfasst werden.

**14.** Vorrichtung nach Anspruch 12, wobei:
der Körperteil des Benutzers einen Finger umfasst.

**Revendications**

**1.** Procédé pour afficher un objet virtuel dans un espace tridimensionnel (3D) à une position souhaitée par rapport à un utilisateur, comprenant les étapes consistant à :

afficher (S802) un premier objet 3D à une première position en affichant une première image de l'œil gauche et une première image de l'œil droit sur un écran d'affichage, dans lequel la première position est à une distance accessible à l'utilisateur ;
recevoir (S804) une interaction de l'utilisateur avec le premier objet 3D, dans lequel l'interaction de l'utilisateur comprend l'identification d'une position du premier objet 3D par l'utilisateur ;
déterminer (S806) des valeurs de coordonnées réelles du premier objet 3D par rapport à l'utilisateur sur la base de l'interaction de l'utilisateur avec le premier objet 3D ;
calculer (S808) les positions de l'œil gauche et de l'œil droit de l'utilisateur sur la base des positions de la première image de l'œil gauche et de la première image de l'œil droit, des valeurs de coordonnées réelles du premier objet 3D, et d'une distance entre l'œil gauche et l'œil droit de l'utilisateur ; et
afficher l'objet virtuel à la position souhaitée en affichant une image gauche d'un objet virtuel et une image droite d'un objet virtuel sur l'écran d'affichage qui sont déduites sur la base des positions de l'œil gauche et de l'œil droit de l'utilisateur et de la position souhaitée de l'objet virtuel.

**2.** Procédé selon la revendication 1, comprenant en outre, préalablement à l'étape de calcul des positions de l'œil gauche et de l'œil droit de l'utilisateur les étapes consistant à :

afficher un deuxième objet 3D à une deuxième position en affichant une deuxième image de l'œil gauche et une deuxième image de l'œil droit, dans lequel la deuxième position est à la distance accessible à l'utilisateur ;
recevoir une interaction de l'utilisateur avec le deuxième objet 3D, l'interaction de l'utilisateur comprenant l'identification d'une position du deuxième objet 3D par l'utilisateur ; et
déterminer les valeurs de coordonnées réelles du deuxième objet 3D par rapport à l'utilisateur sur la base de l'interaction de l'utilisateur avec le deuxième objet 3D.

**3.** Procédé selon la revendication 2, dans lequel l'étape de calcul des positions de l'œil gauche et de l'œil droit de l'utilisateur est basée sur les positions de la première image de l'œil gauche et de la première image de l'œil droit, les valeurs de coordonnées réelles du premier objet 3D, les positions de la deuxième image de l'œil gauche et de la deuxième image de l'œil droit, et les valeurs de coordonnées réelles du deuxième objet 3D.

**4.** Procédé selon la revendication 2, dans lequel la deuxième position est éloignée de la première position.

**5.** Procédé selon la revendication 1, dans lequel l'étape de détermination des valeurs de coordonnées réelles du premier objet 3D par rapport à l'utilisateur comprend en outre les étapes consistant à :

détecter les valeurs de coordonnées d'une partie du corps de l'utilisateur ; et
déterminer les valeurs de coordonnées du premier objet 3D sur la base des valeurs de coordonnées de la partie du corps.

**6.** Procédé selon la revendication 5, dans lequel :
les valeurs de coordonnées de la partie du corps de l'utilisateur sont détectées par une caméra 3D, un gant numérique ou une télécommande.

**7.** Procédé selon la revendication 5, dans lequel la partie du corps de l'utilisateur comprend un doigt.

**8.** Appareil pour afficher un objet virtuel dans un espace tridimensionnel (3D) à une position souhaitée par rapport à un utilisateur, comprenant :

    un module d'affichage (302) configuré pour afficher un premier objet 3D à une première position en affichant une première image de l'œil gauche et une première image de l'œil droit sur un écran d'affichage, dans lequel la première position est à une distance accessible à l'utilisateur ;
    un module d'interaction (304) configuré pour recevoir une interaction de l'utilisateur avec le premier objet 3D, dans lequel l'interaction de l'utilisateur comprend l'identification d'une position du premier objet 3D par l'utilisateur ;
    un module de détermination (306) configuré pour déterminer des valeurs de coordonnées réelles du premier objet 3D par rapport à l'utilisateur sur la base de l'interaction de l'utilisateur avec le premier objet 3D ;
    un module informatique (308) configuré pour calculer les positions de l'œil gauche et de l'œil droit de l'utilisateur sur la base des positions de la première image de l'œil gauche et de la première image de l'œil droit, des valeurs de coordonnées réelles du premier objet 3D, et d'une distance entre l'œil gauche et l'œil droit de l'utilisateur ;
    dans lequel le module d'affichage est en outre configuré pour afficher l'objet virtuel à la position souhaitée en affichant l'image gauche d'un objet virtuel et l'image droite d'un objet virtuel sur l'écran d'affichage qui sont déduites sur la base des positions de l'œil gauche et de l'œil droit de l'utilisateur et de la position souhaitée de l'objet virtuel.

**9.** Appareil selon la revendication 8, dans lequel :

    le module d'affichage est en outre configuré pour afficher un deuxième objet 3D à une deuxième position en affichant une deuxième image de l'œil gauche et une deuxième image de l'œil droit ;
    le module d'interaction est en outre configuré pour recevoir une interaction de l'utilisateur avec le deuxième objet 3D, dans lequel l'interaction de l'utilisateur comprend l'identification d'une position du deuxième objet 3D par l'utilisateur ; et
    le module de détermination est en outre configuré pour déterminer des valeurs de coordonnées réelles du deuxième objet 3D par rapport à l'utilisateur sur la base de l'interaction de l'utilisateur avec le deuxième objet 3D.

**10.** Appareil selon la revendication 9, dans lequel le module informatique est en outre configuré pour :
calculer les positions de l'œil gauche et de l'œil droit de l'utilisateur sur la base des positions de la première image de l'œil gauche et de la première image de l'œil droit, des valeurs de coordonnées réelles du premier objet 3D, des positions de la deuxième image de l'œil gauche et de la deuxième image de l'œil droit, et des valeurs de coordonnées réelles du deuxième objet 3D.

**11.** Appareil selon la revendication 9, dans lequel la deuxième position est espacée de la première position.

**12.** Appareil selon la revendication 8, dans lequel le module de détermination est en outre configuré pour

    détecter des valeurs de coordonnées d'une partie du corps de l'utilisateur ; et
    déterminer les valeurs de coordonnées du premier objet 3D sur la base des valeurs de coordonnées de la partie du corps.

**13.** Appareil selon la revendication 12, dans lequel :
les valeurs de coordonnées de la partie du corps de l'utilisateur sont détectées par une caméra 3D, un gant numérique, ou une télécommande.

**14.** Appareil selon la revendication 12, dans lequel :
la partie du corps de l'utilisateur comprend un doigt.

100

Sensor 104

User 108

TV 102

**FIG. 1**

200

Storage medium 204

Communication module 208

Processor 202

Display 206

Database 210

Peripherals 212

**FIG. 2**

```
┌─────────────────────────────────────┐
│      Display Module 302             │ ◄────┐
└─────────────────────────────────────┘      │
              ▲                               │
              │                               │
              ▼                               │
┌─────────────────────────────────────┐      │
│      Interaction Module 304         │      │
└─────────────────────────────────────┘      │
              ▲                               │
              │                               │
              ▼                               │
┌─────────────────────────────────────┐      │
│      Determination Module 306       │      │
└─────────────────────────────────────┘      │
              ▲                               │
              │                               │
              ▼                               │
┌─────────────────────────────────────┐      │
│      Computing Module 308           │ ◄────┘
└─────────────────────────────────────┘
```

**FIG. 3**

A ☐ 3D vision

Left image     Right image

·····················─────────┐┌─────────·················· Screen
D                              E

B           C

Left eye          Right eye ·······─·─·─· Viewer

**FIG. 4**

16

Left image | Right image

D | E | Screen

3D vision | A

B | C

Left eye | Right eye | Viewer

**FIG. 5**

| Determining position of the left eye of a user and position of the right eye of the user | S6001 |

| Based on the positions of user's left eye and right eye and a desired position of a virtual object with respect to the user, calculating position of a left image corresponding to the virtual object and position of a right image corresponding to the virtual object | S6002 |

| Generating the left image and the right image at the calculated positions such that the virtual project is displayed at the desired position with respect to the user | S6003 |

**FIG. 6**

**FIG. 7**

Displaying a first 3D object at a first position through displaying a first left eye image and a first right eye image — S802

Receiving user interaction with the first 3D object — S804

Determining actual coordinates of the first 3D object with respect to the user based on the user interaction — S806

Calculating positions of the user's left eye and right eye — S808

**FIG. 8**

Generating
left and right
images

3D display
module 908

Image parallax
generation
module 906

Providing to-be-
displayed contents
and three-
dimensional
coordinates thereof

Displaying virtual
object

Providing
coordinates of
human eyes,
generating and/or
calibrating image
parallax generation
parameters

Application logic
module 904

Watch and/or touch
virtual object

Body sensing
module 902

Providing human
body coordinates
and gesture

Detecting coordinates
of human eyes and
human body,
monitoring human
gestures

**FIG. 9**

**EP 3 286 601 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104331152 A